# EUROPÄISCHE PATENTSCHRIFT

(11) **EP 1 913 278 B1**
(45) Veröffentlichungstag und Bekanntmachung des Hinweises auf die Patenterteilung: **26.10.2011**
(21) Anmeldenummer: 06761264.8
(22) Anmeldetag: 08.08.2006
(51) Int. Cl.: F16D 65/12

(54) **SCHEIBENBREMSE MIT BREMSSCHEIBENRING AUS SPRÖDEM WERKSTOFF UND FAHRZEUG MIT EINER ODER MEHREREN SOLCHER SCHEIBENBREMSEN**
DISK BRAKE COMPRISING BRAKE DISK RINGS MADE OF BRITTLE MATERIAL AND VEHICLE FITTED WITH ONE OR SEVERAL DISK BRAKES OF SAID TYPE
FREIN A DISQUE A ANNEAU DE DISQUE DE FREIN EN MATERIAU FRIABLE ET VEHICULE EQUIPE D'UN OU DE PLUSIEURS FREINS A DISQUE DE CE TYPE

(30) Priorität: 08.08.2005 CH 13042005
(43) Veröffentlichungstag der Anmeldung: 23.04.2008
(73) Patentinhaber: Wagner, Arnold, 8406 Winterthur (CH)
(72) Erfinder: WAGNER, Arnold, CH-8406 Winterthur (CH)
(74) Vertreter: EGLI-EUROPEAN PATENT ATTORNEYS
(86) Internationale Anmeldenummer: PCT/CH2006/000413
(87) Internationale Veröffentlichungsnummer: WO 2007/016806

(56) Entgegenhaltungen:
- DE-A1- 3 814 680
- DE-A1- 10 262 070
- DE-A1-102004 002 710
- DE-A1-102004 048 916

## Beschreibung

Die Erfindung betrifft eine Scheibenbremse mit Bremsscheibenring aus sprödem Material geringer Zugfestigkeit und Bruchdehnung, beispielsweise aus Keramikwerkstoff und die dafür geeignete Trägervorrichtung.

Bremsscheibenringe werden vorwiegend aus Gewichtsgründen mit leichten Trägervorrichtungen an der Radfelge oder Drehachse befestigt. Solche Trägervorrichtungen, vor allem aus Leichtmetall und ggf. mit schwimmender Lagerung, werden insbesondere im Motorradbau allgemein angewandt.

Bremsscheibenringmaterial ist meist schweres Gusseisen oder Edelstahl.

Seit kurzem ist Bremsscheibenmaterial aus leichtem, siliziertem Kohlefaser-Verbundmaterial, das mittels Erhitzung keramisiert wird, verfügbar und wird bereits im Eisenbahn- und Automobil-Bau angewendet. Beim Motorrad-Bau haben sich bei der Anwendung Probleme ergeben, weil die Zugfestigkeit dieses Materials lediglich 20-30 N/mm2, die Bruchdehnung nur 0,1-0,2 % betragen kann und der Wärmedehnungskoeffizient praktisch Null oder sogar negativ ist. Die Ausnützung der möglichen thermischen Belastung bis rund 1400° C ergibt bei Trägervorrichtungen aus Leichtmetall Isolations-, Festigkeits- und Wärmedehnungsprobleme. Der bei üblicher schwimmender Lagerung in den halbrunden, nach innen offenen Kraftübertragungsflächen des Bremsscheibenrings auftretende Druck führt bei grösseren Bremskräften zum Überschreiten der Zugfestigkeit im Scheibenmaterial und zum Bruch desselben. Es sind auch radial bewegliche Stahlverschraubungen als Verbindung von Bremsscheibenring zur Trägervorrichtung bekannt, die jedoch wegen dem dabei unvermeidlichen Radialschlag zu Auswuchfiproblematik und unruhiger Bremsung führen.

Dokument DE 10 2004 002 710 A1 offenbart eine Bremsscheibe, insbesondene für Motorräder oder Fahrräder.

Aufgabe der Erfindung ist es, eine Scheibenbremse mit Trägervorrichtung zu schaffen, welche die Verwendung von leichtem Keramikmaterial mit voller Ausnützung der Vorteile hoher thermischer Belastbarkeit, geringer Abrasion und hoher Reibwerte insbesondere auch beim Motorrad als Bremsscheibenring ohne Bruchgefahr erlaubt und günstig herstellbar ist.

Erfindungsgemäss wird diese Aufgabe dadurch gelöst, dass der Bremsscheibenring auf der radialen Innenseite 5-12 Aufnahmebohrungen mit Ansenkungen für Senknieten aus Edelstahl auf der Rad-abgewandten Scheiben-Aussenseite aufweist und das diese Bohrungen innen umfassende Scheibenmaterial querschnittsflächenkonstant und ohne Einschnürungen ausgebildet ist.

Ein sternförmiger Innenkranz aus Edelstahl, der jeweils 2 unter einem möglichst flachen Winkel zu einander an die Aufnahmebohrung verlaufende Flachspeichen mit einem an der Vereinigung zur Aufnahmebohrung passenden Gegenloch aufweist und auf der Innenseite mit einem Ring an die Felge angepasst wird, kann mittels Senknieten aus Edelstahl und langsamer Taumel- oder Rosettennietung derart auf den Keramikbremsscheibenring aufgenietet werden, dass sich der Schliesskopf lediglich im Innenkranz aufweitet und keine Sprengung des Keramikscheibenrings'durch Aufweitung im Scheibenmaterial auftritt.

Besonders zweckmässig ist es, die Senknieten derart an die Ansenkung im Bremsscheibenring anzupassen, dass sie um einen geringen Betrag, z.B. etwa 0,5 mm über die Scheibenfläche vorstehen und somit nur durch die Niederhalterung und nicht durch Nietschläge Druck auf das Scheibenmaterial ausgeübt wird.

Mit dieser Nietung an der Flachspeichenvereinigung sind geringe Auflageflächen des Innenkranzes sowie radial innen grosse Lochflächen erzielbar. Bei heisser Scheibe wird nur ein kleiner Kranzbereich um die Nieten aufgeheizt, während sich die Speichen durch Luftkühlung der Lochflächen wenig erwärmen und somit kleine Wärmedehnungen auftreten, die zudem wegen des flachen Speichenwinkels kaum Sprengwirkung durch die unterschiedlichen Wärmedehnungskoeffizienten von Edelstahl und Keramik radial auf den Bremsscheibenring ausüben. Zudem können Flachspeichen bei angepasster Dimensionierung seitlich bzw. axial ausweichen und die Wärmespannungen dadurch weiter vermindern.

Da Keramikbremsscheiben, insbesondere im Verbund mit Keramikbremsklötzen, im Vergleich zu Stahlscheiben mit herkömmlichen Bremsbelägen etwa 2-3 Mal höhere Reibwerte aufweisen, führt schon ein geringer Seitenschlag dieser Keramikbremsscheiben zu Bremsrubbeln und/oder pulsierender Bremskraft. Es ist daher unerlässlich, in der Konstruktion des Innenkranzes eine gewisse axiale Elastizität vorzusehen. Axiale Elastizität verhindert zudem Biegebeanspruchungen des Bremsscheibenrings, welche beim Zuspannen der Bremszangen wegen der geringen Zugfestigkeit zum Bruch führen. Diese Elastizität wird durch das Dickenverhältnis zwischen Bremsscheibenring und Innenkranz, praktisch bei dem für Motorräder üblichen Scheibendurchmesser von 320 mm mit etwa 8 mm Bremsscheibenringdicke und 2 mm Kranzdicke erzielt.

Im Weiteren ist es vorteilhaft, zwischen die Felge und den Innenkranz einen Zwischenring aus Leichtmetall einzubauen. Zweckmäßigerweise wird dieser Zwischenring auf den Innenkranz aufgenietet und kann nach Fertigstellung der aus Keramikbremsscheibenring und der aus Innenkranz plus Zwischenring bestehenden, vernieteten Trägereinrichtung bestehenden Scheibenbremse an der Auflagefläche gegen die Felge durch Überfräsen seitenschlagfrei angepasst werden.

Ausführungsbeispiele der Erfindung sind in Zeichnungen dargestellt und werden mit Bezug auf diese näher beschrieben. Es zeigen:
- Fig. 1: eine perspektivische Explosionszeichnung einer erfindungsgemässen Scheibenbremse 1, bestehend aus dem Bremsscheibenring 2 aus sprödem Material, einer Senkniete 3, dem Innenkranz 4 aus Edelstahl oder ähnlichem Material, einer Rundkopfniete 5 sowie dem überfräsbaren Zwischenring 6 aus Leichtmetall oder ähnlichem Material mit den Aufnahmebohrungen für die Verschraubung 7 am Radfelgenkranz
- Fig. 2: eine perspektivische Darstellung der erfindungsgemässen Scheibenbremse 1 im betriebsfertigen Zustand
- Fig. 3: ein Fahrzeug mit 2 erfindungsgemässen Scheibenbremsen 8, 9

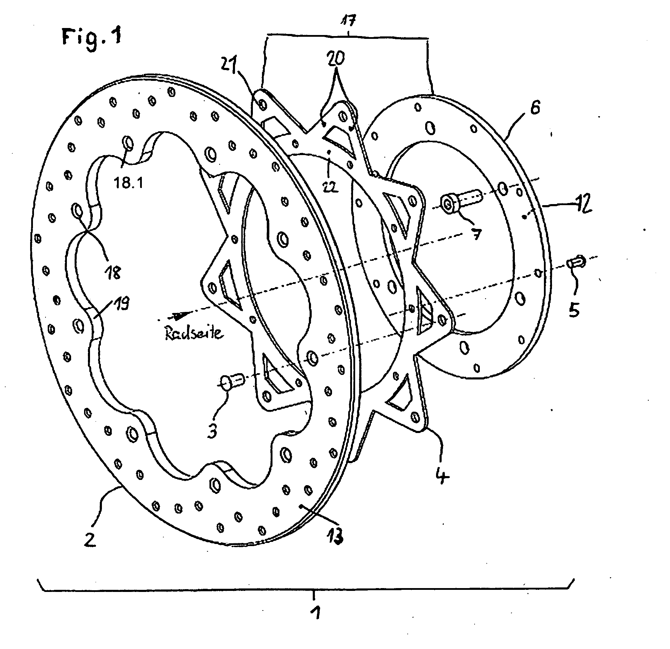

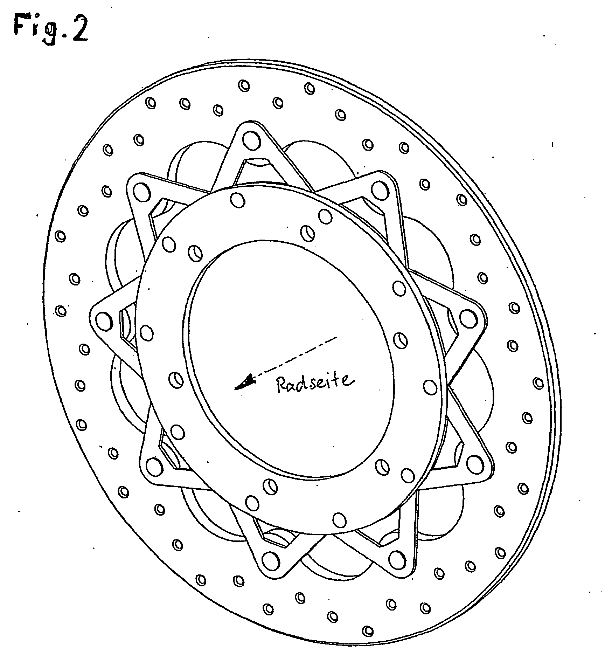

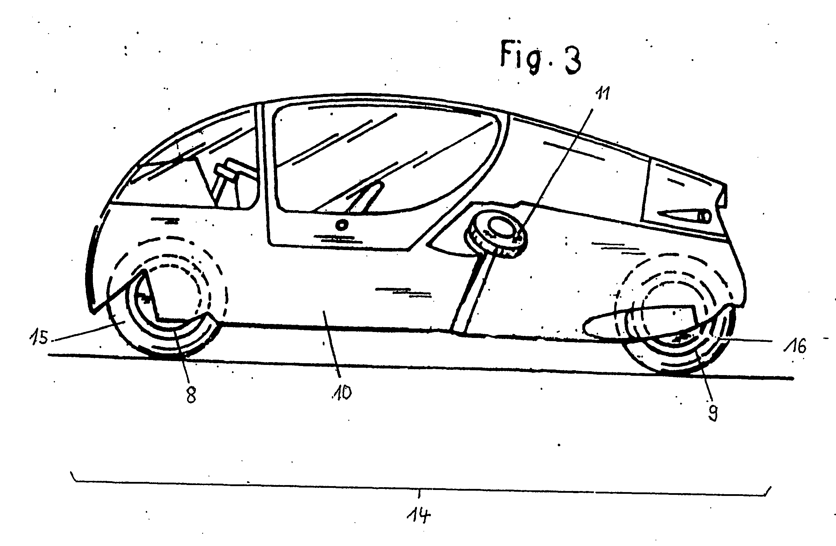

Mit Bezug auf die Figuren 1 - 3 werden nachfolgend Ausgestaltungen der Erfindung beschrieben.

Der Innenkranz 4 wird mit den Senknieten 3 auf den Keramikbremsscheibenring 2 kranzseitig mittels Taumel- oder Rosettenietung langsam, dh. mit Nietfrequenzen von etwa 20-50 Hz und Nietzeiten bis etwa 6 sec aufgenietet, sodass lediglich im Innenkranz 4 eine Nietaufweitung auftritt und das spröde Keramikmaterial nicht aufgesprengt wird. Hierauf wird der an die Aufnahmekontur des Rades angepasste Zwischenring 6 auf der Rad-Innenseite angesetzt und mit dem Innenkranz 4 auf der Kranzseite vernietet. Die Auflagefläche 12 des Zwischenrings 4 gegen die Rad-Aufnahmekontur wird nun exakt parallel zur Aussenseite 13 der Keramikbremsscheibe 2 überfräst, sodass kein Axialschlag in Bezug auf die Bremszange bei der Rotation vorhanden ist.

Die Befestigung der Scheibenbremse 1 am Rad kann durch die Verschraubungen 7 erfolgen.

Das Fahrzeug 14 mit 2 erfindungsgemässen Scheibenbremsen 8, 9, darstellungsmässig ein Kabinenmotorrad, weist ein steuerbares Vorderrad 15 mit einer Scheibenbremse 8 und ein Hinterrad 16 mit der zweiten Scheibenbremse 9 auf, ebenso eine Karosserie 10 und eine in der Fahrt hochziehbare Stützvorrichtung 11 mit Stützrollen.

## Patentansprüche

1. Scheibenbremse (1) für ein Rad, **dadurch gekennzeichnet, dass** mit einem Bremsscheibenring (2) aus sprödem Material, beispielsweise Keramik, eine Trägervorrichtung (17), bestehend aus einem Innenkranz (4) aus Edelstahl sowie einem darauf aufgenieteten oder aufgeschraubten Zwischenring (6) aus Leichtmetall, senkvernietet ist, wobei der Bremsscheibenring (2) auf der radialen Innenseite Aufnahmebohrungen (18) mit Ansenkungen (18.1) für Senknieten (3) aus Edelstahl auf der Rad-abgewandten Scheiben-Aussenseite aufweist und das diese Bohrungen (18) innen umfassende Scheibenmaterial querschnittsflächenkonstant und ohne Einschnürungen ausgebildet ist.

2. Scheibenbremse (1) nach Anspruch 1, **dadurch gekennzeichnet, dass** zur Vernietung von Innenkranz (4) mit Bremsscheibenring (2) Senknieten (3) aus Edelstahl verwendet werden, die bei der Ansenkung (18.1) leicht, dh. ca. 0,5 mm, über den Bremsscheibenring (2) vorstehen.

3. Scheibenbremse (1) nach einem oder mehreren vorhergehenden Ansprüchen, **dadurch gekennzeichnet, dass** der Innenkranz (4) aus Edelstahl jeweils 2 sternförmige Flachspeichen (20) in einem möglichst flachen Winkel zueinander zu jeder Aufnahmebohrung (18) hin aufweist, welche bei der Vereinigung eine zur Aufnahmebohrung passende Gegenbohrung (21) haben und auf der Nabenseite in einen an eine Felge des Rades angepassten Ring (22) verlaufen,
und dass die Materialdicke dieses Innenkranzes (4) derart gewählt ist, dass eine Elastizität der Flachspeichen (20) in seitlicher bzw. axialer Richtung gewährleistet ist.

4. Scheibenbremse (1) nach einem oder mehreren der vorhergehenden Ansprüche, **dadurch gekennzeichnet, dass** der auf den Innenkranz (4) aufgenietete oder aufgeschraubte Zwischenring (6) auf einer
Seite (12) parallel zur Bremsscheibenringfläche (13) nachbearbeitbar ist, um eine schlagfreie Anpassung inklusive Verschraubung (7) an eine Felge eines Rades zu ermöglichen.

5. Fahrzeug (14) mit einer oder mehreren solchen Scheibenbremsen (8, 9) nach einem oder mehreren der vorhergehenden Ansprüche.

## Claims

1. Disc brake (1) for a wheel, **characterized in that** a support device (17), consisting of an inner rim (4) of stainless steel and of an intermediate ring (6) of light metal riveted or screwed thereon is flush-riveted together with a brake disc ring (2) of brittle material, for example ceramic, wherein the brake disc ring (2) on the radial inner side has receiving holes (18) with counterbores (18.1) for countersunk rivets (3) of stainless steel on the disc outer side facing away from the wheel and the disc material enclosing these holes (18) on the inside is formed with a constant cross-section and without constrictions.

2. Disc brake (1) according to claim 1, **characterized in that** for the riveting of inner rim (4) to brake disc ring (2), countersunk rivets (3) of stainless steel are used, which slightly protrude at the counterbore (18.1), i.e. approximately 0.5 mm over the brake disc ring (2).

3. Disc brake (1) according to one or more of the preceding claims, **characterized in that** the inner rim (4) of stainless steel comprises respectively 2 star-shaped flat spokes (20) at as flat an angle with respect to each other as possible towards each receiving hole (18), which at the conjunction have a counter hole (21) fitting the receiving hole and on the hub side run into a ring (22) adapted to a wheel-rim of the wheel,
and that the material thickness of this inner rim (4) is selected such that an elasticity of the flat spokes (20) is guaranteed in lateral or respectively axial direction.

4. Disc brake (1) according to one or more of the preceding claims, **characterized in that** the intermediate ring (6), riveted or screwed onto the inner rim (4), can be reworked on a side (12) parallel to the brake disc ring surface (13),
in order to make possible an adaptation free of runout including screw connection (7) to a wheel-rim of a wheel.

5. Vehicle (14) with one or more such disc brakes (8, 9) according to one or more of the preceding claims.

## Revendications

1. Frein à disques (1) pour une roue, **caractérisé en ce qu'**un dispositif support (17), comprenant une couronne intérieure (4) en acier Inox et une bague intermédiaire (6) rivetée ou vissée dessus en alliage léger, est riveté de façon noyée avec une bague de disque de frein (2) à base de matériau cassant, par exemple de la céramique, la bague du disque de frein (2) présentant sur le côté intérieur radial des alésages de logement (18) avec des chanfreins (18.1) pour des rivets à tête noyée (3) en acier Inox sur le côté extérieur du disque opposé à la roue et **en ce que** le matériau de disque comprenant ces alésages (18) à l'intérieur est constant au niveau de la surface de section et est conçu sans strictions.

2. Frein à disques (1) selon la revendication 1, **caractérisé en ce que** des rivets à tête noyée (3) à base d'acier Inox, qui dépassent légèrement, c'est-à-dire d'environ 0,5 mm, de la bague du disque de frein (2) lors du chanfreinage (18.1), sont utilisés pour le rivetage de la couronne intérieure (4) avec la bague du disque de frein (2).

3. Frein à disques (1) selon l'une quelconque ou plusieurs des revendications précédentes, **caractérisé en ce que** la couronne intérieure (4) en acier Inox présente à chaque fois 2 rayons plats (20) en forme d'étoile dans un angle aussi plat que possible l'un par rapport à l'autre en direction de chaque alésage de logement (18), lesquels ont un contre-alésage (21) adapté à l'alésage de logement lors de la réunion et sont agencés sur le côté de moyeu dans une bague (22) adaptée à une jante de la roue,
et **en ce que** l'épaisseur de matériau de cette couronne intérieure (4) est choisie de telle sorte qu'une élasticité des rayons plats (20) est garantie dans le sens latéral ou le sens axial.

4. Frein à disques (1) selon l'une quelconque ou plusieurs des revendications précédentes, **caractérisé en ce que** la bague intermédiaire (6) rivetée ou vissée sur la couronne intérieure (4) peut être réusinée sur un côté (12) parallèlement à la surface de bague de disque de frein (13), afin de permettre une adaptation sans choc avec l'assemblage vissé (7) à une jante d'une roue.

5. Véhicule (14) comprenant un ou plusieurs freins à disque (8, 9) de ce type selon l'une quelconque ou plusieurs des revendications précédentes.
